**Europäisches Patentamt**

**European Patent Office**

**Office européen des brevets**

(19)

(11) Numéro de publication : **0 296 025 B1**

(12) **FASCICULE DE BREVET EUROPEEN**

(45) Date de publication du fascicule du brevet : -
23.10.91 Bulletin 91/43

(51) Int. Cl.⁵ : **F16D 3/20, F16D 3/22, F16D 3/84**

(21) Numéro de dépôt : **88401391.3**

(22) Date de dépôt : **08.06.88**

(54) **Dispositif de transmission à arbre de transmission tubulaire.**

(30) Priorité : **12.06.87 FR 8708493**

(43) Date de publication de la demande :
**21.12.88 Bulletin 88/51**

(45) Mention de la délivrance du brevet :
**23.10.91 Bulletin 91/43**

(84) Etats contractants désignés :
**DE ES GB IT**

(56) Documents cités :
**DE-C- 889 851**
**FR-A- 801 710**
**FR-A- 918 808**
**FR-A- 2 154 879**
**FR-A- 2 169 475**
**FR-A- 2 257 042**
**FR-A- 2 444 194**

(56) Documents cités :
**FR-A- 2 549 782**
**GB-A- 2 090 374**
**GB-A- 2 091 381**
**Köhler/Rögnitz "Maschinenteile,Teil 1" 5ème
édition,1976,B.G.Teubuch Stuttgart.**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Halconruy, Thierry**
**58, rue des Chantiers**
**F-78000 Versailles (FR)**

(74) Mandataire : **Boivin, Claude**
**9, rue Edouard-Charton**
**F-78000 Versailles (FR)**

## Description

La présente invention concerne un dispositif de transmission, tel qu'il est connu du document DE-C-889851, comportant un arbre de transmission et un joint de transmission universel comprenant un élément extérieur en forme de bol, un élément intérieur monté sur des cannelures formées à une extrémité de l'arbre de transmission et des galets ou des billes interposés entre l'élément extérieur et l'élément intérieur.

Le plus souvent les cannelures sont réalisées sur un embout plein qui est soudé à l'extrémité de l'arbre de transmission tubulaire et présente au moins une gorge pour le logement d'un jonc d'arrêt. Mais cette solution est chère et délicate à mettre au point techniquement.

On peut également former les cannelures directement sur l'extrémité du tube déjà travaillé et mis en forme et assurer l'étanchéité par un bouchon emmanché dans le tube ; mais, dans les dispositifs de transmission de ce type actuellement réalisés, le tube présente au niveau des cannelures, pour le logement du jonc d'arrêt, une gorge dont la réalisation est difficile.

La présente invention a pour objet un dispositif de transmission pour arbre de transmission tubulaire et joint de transmission universel, qui remédie à cet inconvénient.

Ce dispositif est caractérisé en ce qu'un bouchon est emmanché à force dans l'extrémité de l'arbre de transmission en assurant l'étanchéité entre l'intérieur de l'arbre et le joint de transmission et en ce que ce bouchon présente des moyens permettant de retenir l'élément intérieur sur l'arbre de transmission. Le bouchon assure ainsi à la fois l'étanchéité de l'arbre et l'arrêt du joint de transmission, ce qui évite de prévoir une gorge sur les cannelures du tube.

On a décrit ci-après, à titre d'exemples non limitatifs deux modes de réalisation du dispositif selon l'invention, avec référence au dessin annexé dans lequel :

La Figure 1 est une vue en coupe axiale d'un premier mode de réalisation ;

La Figure 2 est une vue semblable à la Figure 1 d'un autre mode de réalisation ;

La Figure 3 est une vue, à plus grande échelle, d'un détail de la Figure 2.

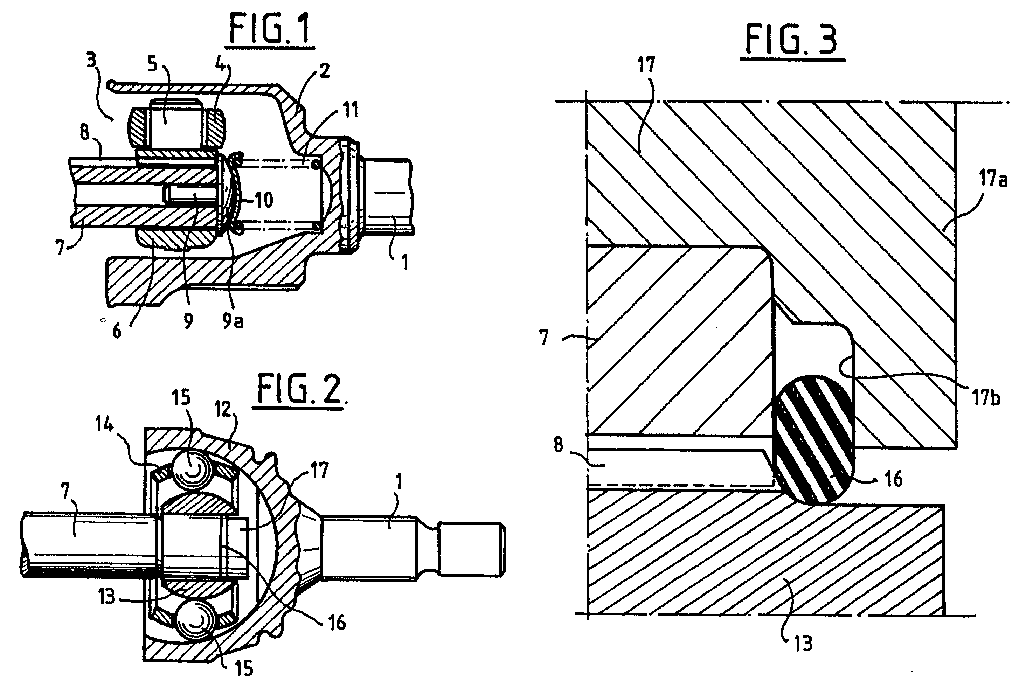

A la Figure 1, on voit un arbre 1 dont une extrémité est solidaire d'un élément d'entraînement extérieur 2 en forme de bol. Cet élément présente trois chemins de roulement 3 rectilignes, sensiblement parallèles à l'axe de l'arbre 1 et régulièrement espacés angulairement de 120°. Chaque chemin de roulement 3 coopère avec un galet 4 monté libre en rotation sur un pivot radial 5 d'un moyeu tripode 6. Ce moyeu est lié en rotation à un arbre de transmission tubulaire 7 grâce à des cannelures et des nervures longitudinales prévues respectivement sur l'arbre 7, comme indiqué en 8, et dans un alésage du moyeu 6 engagé autour de l'arbre 7.

Dans l'extrémité de l'arbre 7 est emmanché à force un bouchon 9 dont la tête élargie 9a présente un diamètre extérieur supérieur au diamètre intérieur du moyeu 6. Ce bouchon assure ainsi l'étanchéité de l'arbre tubulaire 7 et le maintien du moyeu tripode 6 sur cet arbre.

La tête 9a du bouchon 9 présente une forme extérieure partiellement sphérique. Une coupelle 10 qui a une forme partiellement sphérique, avec le même rayon que la tête 9a est appliquée sur cette tête 9a par un ressort 11 interposé entre cette coupelle et le fond du bol 2. Le bouchon assure donc également le maintien du ressort.

Dans le mode de réalisation des Figures 2 et 3, l'arbre 1 est relié à l'arbre tubulaire 7 par un joint du type RZEPPA qui comprend un élément extérieur ou bol 12 solidaire de l'arbre 1, un élément intérieur ou noix 13 claveté sur l'arbre tubulaire 7 et une cage de guidage sphérique 14 pour des billes 15 engagées dans des gorges du bol et de la noix. Cette dernière est arrêtée axialement sur l'arbre 7 d'une part par un arrêt formé sur l'arbre 7 et d'autre part par un jonc 16 prenant appui sur un épaulement périphérique de cette noix.

Dans l'extrémité de l'arbre 7 est emmanché à force un bouchon 17 dont la tête élargie 17a présente sur sa face interne un décrochement 17b dans lequel est engagé le jonc 16, le diamètre de ce décrochement étant à cet effet sensiblement inférieur au diamètre intérieur du jonc en position de montage ; le diamètre de la tête 17a est supérieur au diamètre intérieur du jonc, mais inférieur au diamètre intérieur de la noix 13.

Comme dans le mode de réalisation de la Figure 1, le bouchon 17 assure à la fois l'étanchéité de l'arbre tubulaire 7 et le maintien sur cet arbre de l'élément intérieur 13 du joint.

Il va de soi que la présente invention ne doit pas être considérée comme limitée aux deux modes de réalisation décrits et représentés, mais en couvre, au contraire, toutes les variantes.

## Revendications

1. Dispositif de transmission comportant un arbre de transmission (7), au moins un joint de transmission universel comprenant un élément extérieur (2 ou 12) en forme de bol, un élément intérieur (6 ou 13) coopérant avec l'élément extérieur et monté sur des cannelures réalisées en bout de l'arbre de transmission (7), caractérisé en ce que l'arbre de transmission (7) est tubulaire, en ce qu'un bouchon d'étanchéité (9 ou 17) est emmanché à force dans l'extrémité de l'arbre de transmission (7) en assurant l'étanchéité entre l'intérieur de l'arbre et le joint de transmission, et en ce que ce bouchon présente des moyens permettant de retenir l'élément intérieur (6 ou 13) sur l'arbre de transmission.

2. Dispositif selon la revendication 1, dans lequel le joint de transmission est un joint du genre tripode, caractérisé en ce que pour retenir l'élément intérieur le bouchon (9) présente une tête (9a) de diamètre extérieur supérieur au diamètre intérieur de l'élément intérieur (6).

3. Dispositif selon la revendication 2, dans lequel un ressort (11) est interposé entre le fond du bol (2) et une coupelle (10) ayant une forme partiellement spherique, caractérisé en ce que la tête (9a) du bouchon présente une forme extérieure partiellement sphérique de même rayon que la coupelle et destinée à coopérer avec cette coupelle.

4. Dispositif selon la revendication 1, dans lequel le joint de transmission est un joint comprenant un élément intérieur (13) engagé sur des cannelures réalisées à l'extrémité de l'arbre de transmission tubulaire (7) et arrêté d'une part par un arrêt formé sur l'arbre de transmission et d'autre part par un jonc (16), caractérisé en ce que la tête (17a) du bouchon présente sur sa face d'appui sur l'extrémité de l'arbre tubulaire un décrochement (17b) dans lequel est engagé le jonc (16) et dont le diamètre est sensiblement inférieur au diamètre intérieur du jonc en position de montage.

5. Dispositif selon la revendication 4, caractérisé en ce que le diamètre extérieur de la tête (17a) du bouchon (17) est sensiblement inférieur au diamètre intérieur de l'élément intérieur (13).

## Patentansprüche

1. Kraftübertragungsvorrichtung mit einer Übertragungswelle (7) und mindestens einem Übertragungs-Kardangelenk, welches ein schalenförmiges Außenelement (2 oder 12) aufweist sowie ein Innenelement (6 oder 13), das mit dem Außenelement zusammenwirkt und auf am Endabschnitt der Übertragungswelle (7) angeordneten Nuten montiert ist, dadurch gekennzeichnet, daß die Übertragungswelle (7) rohrförmig ausgebildet ist, daß ein Dichtungsstopfen (9 oder 17) mit Gewalt in das Ende der Übertragungswelle (7) eingepreßt ist zur Abdichtung des Innenraums der Welle gegenüber dem Übertragungsgelenk und daß dieser Stopfen Mittel aufweist, die ein Festhalten des Innenelements (6 oder 13) auf der Übertragungswelle ermöglichen.

2. Vorrichtung nach Anspruch 1, bei der das Übertragungsgelenk ein Dreibeingelenk ist, dadurch gekennzeichnet, daß der Stopfen (9) zum Festhalten des Innenelements einen Kopf (9a) aufweist, dessen Außendurchmesser größer ist als der Innendurchmesser des Innenelements (6).

3. Vorrichtung nach Anspruch 2, bei der zwischen dem Boden der Schale (2) und einem Federteller (10) mit teilweise sphärischer Form eine Feder (11) eingeschaltet ist, dadurch gekennzeichnet, daß der Kopf (9a) des Stopfens eine teilweise sphärische Form besitzt, die den gleichen Radius aufweist wie der Federteller und dazu bestimmt ist, mit diesem Federteller zusammenzuwirken.

4. Vorrichtung nach Anspruch 1, bei der das Übertragungsgelenk ein Gelenk mit einem Innenelement (13) ist, welches in am Ende der rohrförmigen Übertragungswelle (7) angeordnete Nuten eingreift und einerseits durch einen auf der Übertragungswelle gebildeten Anschlag und andererseits durch einen Sprengring (16) arretiert ist, dadurch gekennzeichnet, daß der Kopf (17a) des Stopfens an seiner auf dem Ende der rohrförmigen Welle abgestützten Fläche eine Versetzung (17b) aufweist, in die der Sprengring (16) eingreift und deren Durchmesser deutlich kleiner ist als der Innendurchmesser des Sprengrings in der Montagestellung.

5. Vorrichtung nach Anspruch 4, dadurch gekennzeichnet, daß der Außendurchmesser des Kopfes (17a) des Stopfens (17) deutlich kleiner ist als der Innendurchmesser des Innenelements (13).

## Claims

1. Transmission device comprising a transmission shaft (7), at least one universal transmission joint including one external bowl-shaped element (2 or 12), one internal element (6 or 13) cooperating with the external element and mounted on grooves embodied at the end of the transmission shaft (7), wherein the transmission shaft (7) is tubular, wherein a sealing plug (9 or 17) is forcefully fitted into the extremity of the transmission shaft (7), thus ensuring imperviousness between the interior of the shaft and the transmission joint, and wherein the plug possesses means able to retain the internal element (6 or 13) on the transmission shaft.

2. Device according to claim 1, wherein the transmission joint is a tripod type joint, wherein so as to retain the internal element, the plug (9) has a head (9a) whose outer diameter is larger than the internal diameter of the internal element (6).

3. Device according to claim 2, wherein a spring (11) is inserted between the bottom of the bowl (2) and a cup (10) having a partly spherical shape, wherein the head (9a) of the plug has a partly spherical shape and has the same radius as the cup and is intended to cooperate with this cup.

4. Device according to claim 1, wherein the transmission joint is a joint including one internal element (13) engaged on grooves embodied at the extremity of the tubular transmission shaft (7) and ended firstly by a stop catch formed on the transmission shaft and secondly by a retaining ring (16), wherein the head (17a) of the plug has on its support face on the extremity of the tubular shaft a step (17b) in which the retaining ring (16) is engaged and whose diameter is approximately smaller than the internal diameter of the retaining ring in the mounting position.

5. Device according to claim 4, wherein the external diameter of the head (17a) of the plug (17) is approximately smaller than the internal diameter of the internal element (13).

FIG.1

FIG.3

FIG.2

EP 0 296 025 B1